# EUROPEAN PATENT APPLICATION

(11) **EP 4 349 155 A1**
(43) Date of publication of application: **10.04.2024**
(21) Application number: 23198008.7
(22) Date of filing: 18.09.2023
(51) Int. Cl.: A01D 67/00, A01D 34/86

(54) **INTER-ROW EQUIPMENT CARRIER**

(30) Priority: 06.10.2022 IT 202200020523
(71) Applicant: Zanon S.R.L., 35011 Campodarsego PD (IT)
(72) Inventor: ZANON, Franco, 35011 CAMPODARSEGO PD (IT)
(74) Representative: Modiano, Micaela Nadia

(57) **Abstract**

An inter-row equipment carrier (10) comprising:
- a chassis (11) for supporting one or more implements (12a, 12b), the one or more implements (12a, 12b) being adapted to protrude from the transverse footprint of the chassis (11),
- lifting means (13) for lifting the one or more implements (12a, 12b); the lifting means (13) are within the transverse footprint of the chassis (11).

## Description

The present invention relates to a reversible inter-row equipment carrier.

In the present description, the term "reversible" means that the inter-row equipment carrier can be attached either to the rear or to the front of a tractor, with reference to its direction of travel.

The invention is used in agriculture, in particular for work between rows of fruit-bearing trees and/or plants.

Currently, for work on the ground between rows of trees or plants, a rear equipment carrier is usually used which has a supporting chassis for one or more implements such as lawn mowers, mowers, bush cutters, etc.

The rear equipment carrier is provided with at least two wheels, connected to the chassis, and is drawn by a tractor to which it is attached at the rear, considering the latter's direction of travel.

Such tractor may also transmit motion to the implements fixed to the equipment carrier by means of a mechanical and/or hydraulic transmission.

The implements are usually arranged so as to protrude from the transverse footprint of the frame.

In the present description, the expression "transverse footprint" means the footprint:
- on a plane that is perpendicular to the travel direction of the tractor to which the carrier is connected in the configuration for use,
- and in a direction parallel to the ground.

Such equipment carriers are therefore provided with means for lifting the implements when not in use.

For example, when the region of the row that is to be worked ends, it is necessary to lift the implement to avoid ruining any other types of crops present.

Likewise, it is necessary to lift the implement if the work is to be carried out on a row that is not completely level.

To do this, hydraulic actuators are known which are arranged vertically, outside the transverse footprint of the chassis and proximate to/at the implement to be lifted.

This background art has drawbacks.

In fact, the presence of hydraulic actuators, arranged vertically proximate to/at the implement to be lifted, lead to a significant overall transverse footprint of the carrier, which can cause difficulties in maneuvering when moving between narrow and closely spaced rows.

Moreover, the presence of hydraulic actuators, arranged vertically proximate to/at the implement to be lifted and therefore outside of the transverse footprint of the chassis, may cause difficulties in under-canopy work and/or problems to crops in the case of under-canopy work when they extend from low heights.

The aim of the present invention is to provide an inter-row equipment carrier that is capable of improving the background art in one or more of the above aspects.

Within this aim, an object of the invention is to provide an inter-row equipment carrier that has a smaller overall transverse footprint, compared with similar apparatuses of the known type.

Another object of the invention is to provide an inter-row equipment carrier that allows easy under-canopy work and without the risk of damaging crops even if they extend from low heights.

A further object of the present invention is to overcome the drawbacks of the background art in a manner that is alternative to any existing solutions.

Not least object of the invention is to provide an inter-row equipment carrier that is highly reliable, relatively easy to provide, and at competitive costs.

This aim, as well as these and other objects which will become better apparent hereinafter, are achieved by an inter-row equipment carrier comprising:
- a chassis for supporting one or more implements, said one or more implements being adapted to protrude from the transverse footprint of said chassis,
- lifting means for lifting said one or more implements,
characterized in that said lifting means are within the transverse footprint of said chassis.

Further characteristics and advantages of the invention will become better apparent from the description of a preferred but not exclusive embodiment of the inter-row equipment carrier according to the invention, illustrated by way of non-limiting example in the accompanying drawings, wherein:

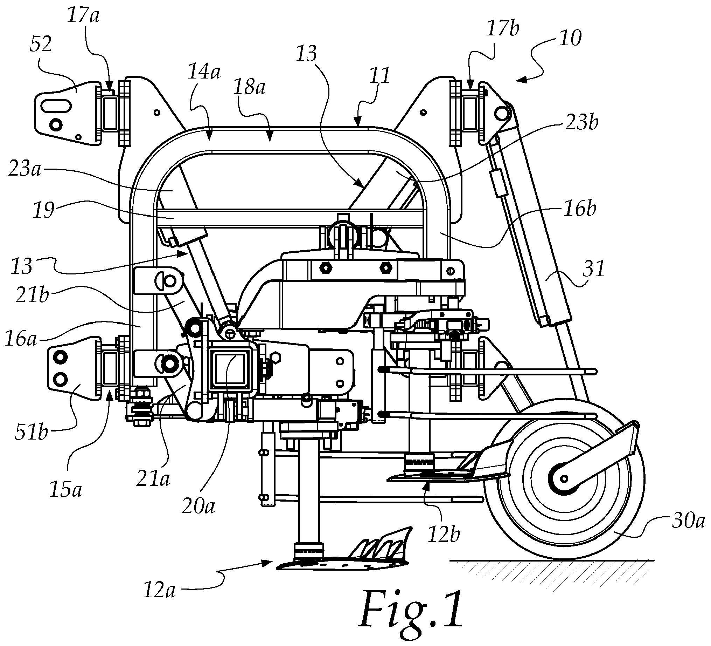

Figure 1 is a general side view of a reversible equipment carrier, according to the invention;

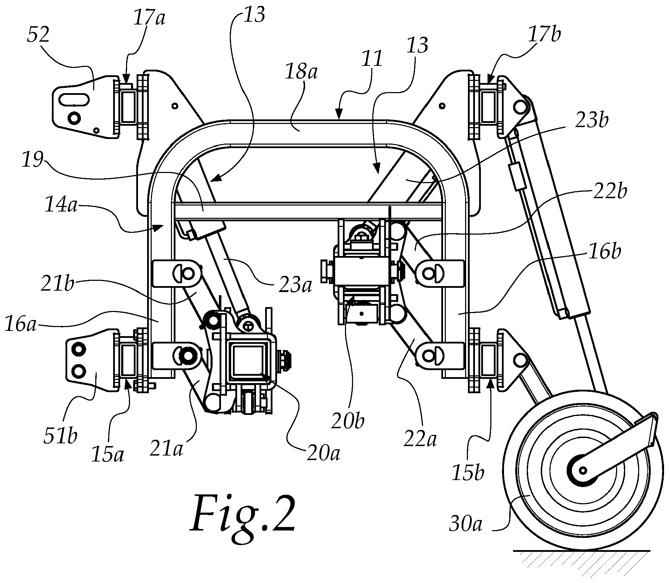

Figure 2 is the same side view of the inter-row equipment carrier of Figure 1, in which some details have been omitted;

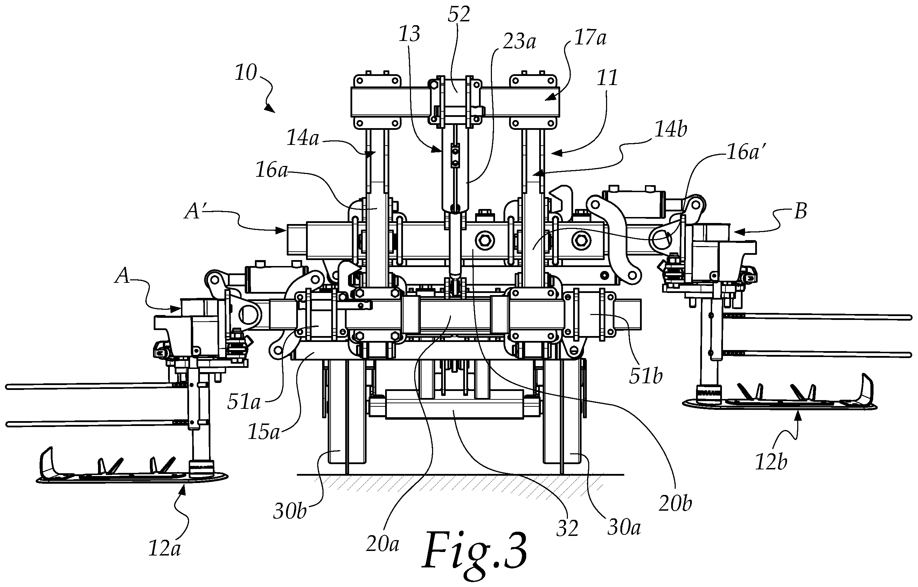

Figure 3 is a general front view of the equipment carrier of Figure 1, which corresponds to a view of the overall transverse footprint of the carrier.

With reference to the figures, a reversible inter-row equipment carrier according to the invention is generally designated by the reference numeral 10.

The carrier 10 comprises:
- a chassis 11 for supporting one or more implements 12a, 12b, which protrude from the transverse footprint of the chassis 11,
- lifting means 13 for lifting the implements 12a, 12b.

One of the particularities of the invention resides in that the lifting means 13 for lifting the implements 12a, 12b are within the transverse footprint of the chassis 11.

In particular, the chassis 11 has two mutually parallel C-shaped elements 14a, 14b, a first element 14a and a second element 14b, respectively.

Such elements 14a, 14b, are mutually fixed by means of:
- first cross-members 15a, 15b, respectively between the corresponding first wings and second wings, in the following order:
- a first wing 16a of the first element 14a and a first wing 16a' of the second element 14b, said first wings 16a, 16a' being directed toward the tractor in the configuration for use,
- a second wing 16b of the first element 14a and a second wing of the second element 14b, not shown in the figures, said second wings 16b being opposite with respect to the first wings 16a, 16a',
- and/or second cross-members 17a, 17b between the corresponding core 18a of the first element 14a and the corresponding core of the second element 14b, not shown in the figures, said second cross-members 17a, 17b being arranged above the first cross-members 15a, 15b.

To ensure greater rigidity of the structure, between the wings 16a, 16a', 16b of a same element 14a, 14b, the carrier 10 comprises third cross-members 19, only one of which is shown in the figures.

Two parallel arms 20a, 20b are coupled to the chassis 11, respectively a first arm 20a and a second arm 20b, each for supporting an implement 12a, 12b, respectively a first implement 12a and a second implement 12b.

The arms 20a, 20b have a transverse extension, i.e., on a plane that is perpendicular to the advancement direction of the carrier 10 in the configuration for use, and can move independently of each other.

Advantageously, the first implement 12a is fixed to a first end A of the first arm 20a and the second implement 12b is fixed to a second end B of the second arm 20b, which is opposite to the end A' of the second arm 20b that corresponds to the first end A of the first arm 20a.

The first arm 20a and the second arm 20b have, at at least one of their ends, means for associating a respective implement 12a, 12b, of a per se known type.

The first arm 20a is coupled to each of the first wings 16a, 16a', of the elements 14a, 14b, by means of two connecting rods 21a, 21b, while the second arm 20b is coupled to each of the second wings 16b, of the elements 14a, 14b, by means of two connecting rods 22a, 22b.

Advantageously, the first arm 20a and the second arm 20b are arranged within the longitudinal footprint of the chassis 11.

In the present description, the expression "longitudinal footprint" means the footprint on a plane:
- parallel to the advancement direction of the tractor to which the carrier is connected in the configuration for use,
- and perpendicular to the ground.

The lifting means 13 for lifting the implements 12a, 12b comprise the connecting rods 21a, 21b, 22a, 22b, the arms 20a, 20b, and an actuator 23a, 23b for each of the arms 20a, 20b.

The actuator 23a, 23b is for example hydraulic and/or electric.

In particular, in the embodiment shown in the figures, the carrier 10 comprises:
- a first hydraulic 23a actuator, which is coupled:
   - at a first end thereof, to a substantially central portion of the first arm 20a,
- at a second end thereof, to a respective second cross-member 17a;
- a second hydraulic 23b actuator, which is coupled:
- at a first end thereof, to a substantially central portion of the second arm 20b,
- at a second end thereof, to a respective second cross-member 17b.

Both the first actuator 23a and the second actuator 23b are interposed between the first element 14a and the second element 14b and are arranged within the transverse footprint of the chassis 11.

It should be noted that the presence and configuration of such actuators 23a, 23b, and connecting rods 21a, 21b, 22a, 22b allows to keep the lifting means 13 for lifting the implements within the transverse footprint of the chassis 11, reducing the overall transverse footprint of the carrier 10 with respect to similar structures of a known type.

When it is necessary to lift/lower a respective implement 12a, 12b, the corresponding actuator 23a, 23b is activated and, by virtue of its motion, draws the respective arm 20a, 20b, which is coupled so as to translate along a path guided by the rotation of the respective connecting rods 21a, 21b, 22a, 22b.

As a result of the movement of the arm 20a, 20b, the respective implement 12a, 12b is raised/lowered.

Advantageously, the lifting means 13 allow lifting of the implements 12a, 12b off the ground on the order of 20 cm.

The chassis 11 has a three-point coupling, 51a, 51b, 52 for associating the carrier 10 with a tractor, respectively:
- two first points 51a, 51b proximate to the ends of a first cross-member 15a,
- a second point 52 arranged in a substantially central position of the corresponding second cross-member 17a.

The carrier 10 comprises two ground resting wheels 30a, 30b, the height of which is adjustable by means of a hydraulic/electric/manual actuator 31, which is coupled:
- at a first end thereof, to a second cross-member 17b, which is opposite to the one provided with the second point 52,
- at a second end thereof, to an axle 32 for the support and rotation of the wheels 30a, 30b, said axle 32 being also coupled to the corresponding first cross-member 15b.

Advantageously, the height of the wheels 30a, 30b can be adjusted independently of the arms 20a, 20b.

It should be noted that since the wheels 30a, 30b and the points 51a, 51b, 52 of the three-point coupling are coupled to the first cross-members 15a, 15b or to the second cross-members 17a, 17b, the chassis 11 can be rotated, making the carrier 10 reversible with respect to the tractor's direction of travel.

In practice it has been found that the invention achieves the intended aim and objects, providing a reversible inter-row equipment carrier that has a smaller overall transverse footprint compared to similar apparatuses of the known type.

Moreover, the invention provides a reversible inter-row equipment carrier that allows easy under-canopy work and without the risk of damaging the crops, even in the presence of canopies that extend from a low height, since it has a height, at the implements, that is substantially equal to that of said implements.

The invention thus conceived is susceptible of numerous modifications and variations, all within the scope of the appended claims; moreover, all the details may furthermore be replaced with other technically equivalent elements.

In practice, the materials used, so long as they are compatible with the specific use, as well as the contingent shapes and dimensions, may be any according to the requirements and the state of the art.

The disclosures in Italian Patent Application No. 102022000020523 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An inter-row equipment carrier (10) comprising:
- a chassis (11) for supporting one or more implements (12a, 12b), said one or more implements (12a, 12b) being adapted to protrude from the transverse footprint of said chassis (11),
- lifting means (13) for lifting said one or more implements (12a, 12b),
**characterized in that** said lifting means (13) are within the transverse footprint of said chassis (11).

2. The carrier (10) according to claim 1, **characterized in that** said chassis (11) is provided with two mutually parallel "C"-shaped elements (14a, 14b), respectively a first element (14a) and a second element (14b).

3. The carrier (10) according to claim 2, **characterized in that** said first and second elements (14a, 14b) are mutually fixed by means of:
- first cross-members (15a, 15b), respectively between the corresponding first wings and second wings, in the following order:
- between a first wing (16a) of said first element (14a) and a first wing (16a') of said second element (14b),
- between a second wing (16b) of said first element (14a) and a second wing of said second element (14b),
- and/or second cross-members (17a, 17b) between the corresponding core (18a) of said first element (14a) and the corresponding core of said second element (14b), said second cross-members (17a, 17b) being arranged in an upper region with respect to said first cross-members (15a, 15b).

4. The carrier (10) according to claim 3, **characterized in that** it comprises third cross-members (19) between the wings (16a, 16a', 16b) of a same one of said elements (14a, 14b).

5. The carrier (10) according to one or more of the preceding claims, **characterized in that** one or more arms (20a, 20b) for supporting each of said one or more implements (12a, 12b) are coupled to said chassis (11).

6. The carrier (10) according to the preceding claim, **characterized in that** it comprises two parallel arms (20a, 20b), respectively a first arm (20a) and a second arm (20b), said first arm (20a) supporting a first implement (12a) of said one or more implements and said second arm (20b) supporting a second implement (12b) of said one or more implements, said first and second arms (20a, 20b) having a transverse extension on a plane that is perpendicular to the direction of advancement of said carrier (10) in the configuration for use.

7. The carrier (10) according to claim 6, **characterized in that** said first arm (20a) and said second arm (20b) are arranged within the longitudinal footprint of said chassis (11).

8. The carrier (10) according to one or more of the preceding claims, **characterized in that** said first implement (12a) is adapted to be attached to a first end (A) of said first arm (20a) and said second implement (12b) is adapted to be attached to a second end (B) of said second arm (20b), said second end (B) of said second arm (20b) being opposite to an end (A') of said second arm (20b) that corresponds to said first end (A) of said first arm (20a), said first arm (20a) and said second arm (20b) being provided with means for the association of a respective implement (12a, 12b).

9. The carrier (10) according to one or more of the preceding claims, **characterized in that**:
- said first arm (20a) is coupled to each of said first wings (16a, 16a') of said elements (14a, 14b) by means of two connecting rods (21a, 21b),
- said second arm (20b) is coupled to each of said second wings (16b) of said elements (14a, 14b) by means of two connecting rods (22a, 22b).

10. The carrier (10) according to one or more of the preceding claims, **characterized in that** said lifting means (13) for lifting said one or more implements (12a, 12b) comprise: said connecting rods (21, 21b, 22a, 22b), said arms (20a, 20b), and an actuator (23a, 23b) for each of said arms (20a, 20b).

11. The carrier (10) according to one or more of the preceding claims, **characterized in that** said actuator (23a, 23b) is of the hydraulic and/or electrical type.

12. The carrier (10) according to one or more of the preceding claims, **characterized in that** it comprises:
- a first actuator (23a) coupled:
- at a first end thereof, to a substantially central portion of said first arm (20a),
- at a second end thereof, to a respective one of said second cross-members (17a),
- a second actuator (23b) coupled:
- at a first end thereof, to a substantially central portion of said second arm (20b),
- at a second end thereof, to a respective one of said second cross-members (17b).

13. The carrier (10) according to one or more of the preceding claims, **characterized in that** said first actuator (23a) and said second actuator (23b) are interposed between said first element (14a) and said second element (14b).

14. The carrier (10) according to one or more of the preceding claims, **characterized in that** said chassis (11) has a three-point coupling (51a, 51b, 52) for associating said carrier (10) with a tractor, respectively:
- two first points (51a, 51b) proximate to the ends of one of said first cross-members (15a),
- a second point (52) arranged in a substantially central position of the corresponding one of said second cross-members (17a).

15. The carrier (10) according to any one or more of the preceding claims, **characterized in that** it comprises two wheels (30a, 30b) for resting on the ground, the height of which is adjustable by means of an actuator (31), said actuator (31) being coupled:
- at a first end thereof, to one of said second cross-members (17b), opposite the one provided with said second point (52),
- at a second end thereof, to an axle (32) for the support and rotation of said wheels (30a, 30b), said axle (32) being also coupled to a corresponding one of said first cross-members (15b).
